# EUROPEAN PATENT APPLICATION

(11) **EP 1 047 071 A2**
(43) Date of publication of application: **25.10.2000**
(21) Application number: 00108016.7
(22) Date of filing: 19.04.2000
(51) Int. Cl.: G11B 23/087

(54) **Tape cassette**

(30) Priority: 21.04.1999 JP 11307699
(71) Applicant: TDK Corporation, Chuo-ku, Tokyo 103-8272 (JP)
(72) Inventor: Hashizume, Kenji, Tokyo 103-8272 (JP); Okamura, Masatoshi, Tokyo 103-8272 (JP); Sato, Shinichi, Tokyo 103-8272 (JP)
(74) Representative: HOFFMANN - EITLE

(57) **Abstract**

A tape cassette having a slider so provided in the case body as to be slidable for opening and closing a recessed portion of a case body, and a biasing member for biasing the slider in such a direction as to close the recessed portion. The slider has protruded portions, the case body has contact portions provided in holes into which the protruded portions are inserted, and when the slider is in the position of closing the recessed portion, with the protruded portions and the contact portions being in close proximity to each other, the slider thereby stops moving in the direction of closing the recessed portion. The case body has a hole, the slider has a protruded portion including a vertical portion entering the hole and a horizontal portion so provided as to embrace a side surface along the hole, and, with the horizontal portion and the side surface being in close proximity each other, the slider thereby stops moving in a direction vertical to the lower surface of the case body. The slider can be thereby surely prevented from coming off the case when assembling the tape cassette.

## Description

### BACKGROUND OF THE INVENTION

### Field of the Invention

The present invention relates to a tape cassette having a slider for a DDS (Digital Data Storage), a DAT (Digital Audio Tape), etc. and more particularly to a structure for preventing the slider from coming off.

### Related Background Art

A conventional tape cassette having a slider such as the DAT, etc. is disclosed in, e.g., Japanese Patent Publication No. 5-14356. An example of this prior art will be explained referring to FIG. 10. A body case 100 includes an upper case 100a and a lower case 100b. A dust cover (slider) 160 is slidably provided on a bottom wall 400 of the lowercase 100b, and engagement pieces 190, 191 extending from side surface plates 180, 181 of the dust cover 160 embrace side walls 120, 121 of the bottom wall 400 down to inner surfaces thereof, thus engaging with these side walls 120, 121. The dust cover (slider) 160 is thereby prevented from coming off the body case 100.

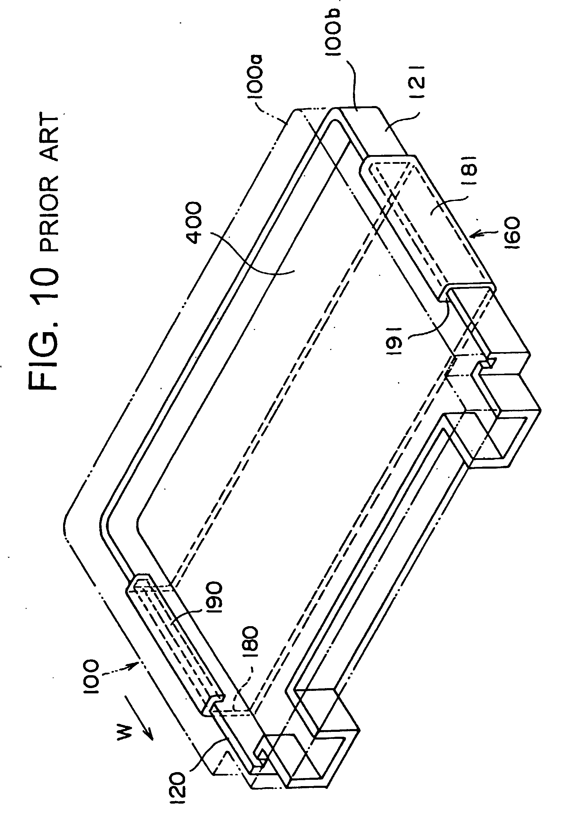

Incidentally, in the tape cassette described above, the slider (the dust cover 160), after being attached to the lower case 100b, is biased in a forward direction W in FIG. 10 by a slider spring. The slider is locked in a forward position by a slider lock and is, it might happen in some cases, unlocked due to vibrations caused in an assembly process, with the result that the slider protrudes forwardly of the lower case. Note that when the assembly is completed, the slider is regulated in its position by a front cover, and hence such a problem does not occur.

In the example of the prior art illustrated in FIG. 10, the engagements of the engagement pieces of the slider function to prevent the slider from coming off the case body downward in FIG. 10 during and after the assembly of the tape cassette. A consideration is not yet, however, given to a forward protrusion of he slider in the sliding direction (a direction W) . Further, it is quite difficult to manufacture by molding the slider taking a configuration as illustrated in FIG. 10. Hence, there arises a problem in which the manufacturing cost rises.

Moreover, Japanese Patent Laid-Open Publication No. 9-282836 discloses that a sustaining member for the lower case engages with an engagement member provided on the slider, thereby preventing the slider from coming off the lower case downwards within a slide range thereof. This prior art does not, however, disclose a measure for preventing the slider from coming off the lower case in the sliding direction (a forward direction of the case body).

### SUMAMRY OF THE INVENTION

It is a primary object of the present invention, which was devised to obviate the above problems inherent in the prior art, to provide a tape cassette capable of surely preventing a slider from coming off a case when assembling the tape cassette with an easy-to-mold simple structure.

According to a first aspect of the present invention, a tape cassette comprises a case body including an upper case and a lower case, a pair of hubs provided within the case body and rotating while being wound with a tape-shaped member, a recessed portion formed on the side of a lower surface of the case body, a slider so provided in the case body as to be slidable for opening and closing the recessed portion, a biasing member for biasing the slider in such a direction as to close the recessed portion, and lock members so provided integrally with the lower case as to lock the slider in respective positions where the recessed portion is closed and opened. The slider has protruded portions, the case body has contact portions provided in holes into which the protruded portions are inserted, and, when the slider is in the position of closing the recessed portion, with the protruded portions and the contact portions being in close proximity to each other, the slider thereby stops moving in the direction of closing the recessed portion.

In the tape cassette according to the first aspect of the invention, even when released form locking by the locking member in the state where the slider is in the position of closing the recessed portion and biased by the biasing member during the assembly, e.g., the lower case, the slider and the biasing member, the protruded portion and the contact portion in the state of being close to each other immediately come to a contact on each other, and the slider moves no farther, with the result that the slider does not come off the case body in the sliding direction thereof. With this contrivance, an assembling characteristic of the tape cassette is enhanced. Further, both of the protruded portion of the slider and the hole of the case body are easy to mold, and hence there is caused neither an intricacy of a die structure nor a rise in manufacturing costs. Note that a height of the protruded portion is set so as not to protrude from the internal surface of the case body, thereby eliminating, as conceived preferable, a possibility of coming into contact with the tape-shaped member within the case body.

The protruded portions and the contact portions may be disposed closer to side surfaces of the case body than respective centers of the pair of hubs. An area of the case body, which is defined between the respective centers of the pair of hubs, is easy to deform by bending and become flexural. The protruded portions and the contact portions are, however, disposed on the side of the side surfaces of the case body with small flexures, and hence the contact between these two members are more ensured. Then, an effect of preventing the slider from coming off the case body is made certain.

According to a second aspect of the present invention, a tape cassette comprises a case body including an upper case and a lower case, a pair of hubs provided within the case body and rotating while being wound with a tape-shaped member, a recessed portion formed on the side of a lower surface of the case body, a slider so provided in the case body as to be slidable for opening and closing the recessed portion, a biasing member for biasing the slider in such a direction as to close the recessed portion, and lock members so provided integrally with the lower case as to lock the slider in respective positions where the recessed portion is closed and opened. The case body has a hole, the slider has a protruded portion including a vertical portion entering the hole and a horizontal portion so provided as to embrace a side surface along the hole, and, with the horizontal portion and the side surface being in close proximity each other, the slider thereby stops moving in a direction vertical to the lower surface of the case body.

In the tape cassette according to the second aspect of the invention, even when the slider is forced to come off the lower case in the direction vertical to the lower surface thereof in the state of its being biased by the biasing member during the assembly, e.g., the lower case, the slider and the biasing member, the horizontal portion and the side surface in the state of being close to each other immediately come to a contact on each other, and the slider moves no farther in the direction vertical to the lower surface of the lower case, with the result that the slider does not come off the case body in the direction vertical to the lower case thereof. With this contrivance, the assembling characteristic of the tape cassette is enhanced. Further, both of the protruded portion, having the vertical portion and the horizontal portion, of the slider and the hole of the case body are easy to mold, and hence there is caused neither the intricacy of the die structure nor the rise in manufacturing costs.

The side surface along the hole may be formed with a stepped portion contacting with the horizontal portion, and the horizontal portion, when so positioned as to embrace the stepped portion, does not protrude from an inner surface of the case body. Since the horizontal portion of the slider engagement portion does not protrude from the internal surface of the case body, there is, as a preferable aspect, no possibility of coming into contact with the tape-shaped member within the case body.

According to a third aspect of the present invention, a tape cassette comprises a case body including an upper case and a lower case, a recessed portion formed on the side of a lower surface of the case body, a slider so provided in the case body as to be slidable for opening and closing the recessed portion, a biasing member for biasing the slider in such a direction as to close the recessed portion, and, lock members so provided integrally with the lower case as to lock the slider in respective positions where the recessed portion is closed and opened. The slider includes first and second slider engagement portions, the case body includes first and second body engagement portions, and, when the slider is in the position where the recessed portion has been closed, with an engagement between the first slider engagement portion and the first body engagement portion, the slider thereby stops moving in the direction of closing the recessed portion, and, with an engagement between the second slider engagement portion and the second body engagement portion, thereby stops moving in a direction vertical to the lower surface of the case body.

In the tape cassette according to the third aspect of the invention, even w hen the slider is in the position of closing the recessed portion and biased by the biasing member, the slider move no farther in the sliding direction thereof due to the engagement between the first slider engagement portion and the first body engagement portion. Therefore, even when released from the locking by the lock member in the position of closing the recessed portion in the case of assembling, e.g., the lower case, the slider and the biasing member, it never happens that the slider comes off the case body in its sliding direction. Further, the slider does not move in vertical direction to the lower surface of the case body by dint of the engagement between the second slider engagement portion and the second body engagement portion. Hence, when assembling, e.g., the lower case, the slider and the biasing member, the slider does not come off the case body in the vertical direction to the lower surface thereof. Thus, the slider can be prevented from coming off the case body both in its sliding direction and in the direction vertical to the lower surface of the case body, thereby enhancing the assembling characteristic of the tape cassette.

The first slider engagement portion may include a protruded portion, and the first body engagement portion may include a contact portion provided at a hole into which the protruded portion is inserted. The slider, with the protruded portion and the contact portion being in close proximity to each other, thereby stops moving in the direction of closing the recessed portion. The second body engagement portion may has a hole, the second slider engagement portion may include a vertical portion entering the hole and a horizontal portion so provided to embrace a side surface along the hole. The slider, with the horizontal portion and the side surface being in close proximity to each other, thereby stops moving in the direction vertical to the lower surface of the case body.

Based on the construction described above, the slider does not come off the case body both in its sliding direction and in the direction vertical to the lower case of the case body during the assembly, etc., and besides, both of the protruded portion of the slider and the hole of the case body are easy to mold. Consequently, there is caused neither the intricacy of the die structure nor the rise in the manufacturing costs.

The first slider engagement portion may serve as the second slider engagement portion, while the first body engagement portion may serve as the second body engagement portion. With this contrivance, the slider can be prevented from coming off the case body both in the sliding direction thereof and in the vertical direction to the lower surface of the case body with a simpler configuration.

The first and second slider engagement portions and the first and second body engagement portions may be disposed closer to the side surface of the case body than respective centers of the pair of hubs provided within the case body and rotating while being wound with the tape-shaped member. An internal area of the case body between the respective centers of the pair of hubs is easy to deform by bending and becomes flexural, however, the slider engagement portion and the body engagement portion are provided closer to the side surfaces of the case body with small flexures. Hence, the engagement between these two members is ensured, and the effect of preventing the slider from coming off the case body is made certain. Note that the slider engagement portion and the body engagement portion are respectively disposed on the side surfaces, thereby making more certain the effect of preventing the slider from coming off the case body.

The lock member may be positioned within an opening formed in the lower case, and the hole may be formed in continuation from the opening. This geometry makes it feasible for the hole to serve as the opening in which the lock member is positioned.

The upper case may be assembled after the slider and the biasing member have been assembled.

### BRIEF DESCRIPTION OF THE DRAWINGS

FIG. 1 is a perspective view of a surface side of a tape cassette for a DAT, showing a first embodiment of the present invention;
FIG. 2 is a perspective view showing a rear surface side of the tape cassette in FIG. 1;
FIG. 3 is a perspective view showing a state of how a slider opens in the tape cassette in FIG. 2;
FIG. 4 is a plan view showing an inner surface of a lower case of the tape cassette in FIG. 1;
FIG. 5A is a plan view of the slider of the tape cassette in FIG. 1; FIG. 5B is a sectional view taken along the line VB-VB in FIG. 5A;
FIG. 6 is a plan view showing a state where the lower case, the slider and a slider spring are assembled;
FIG. 7A is a plan view of the internal surface of the lower case of the cassette tape, showing a second embodiment of the present invention; FIG. 7B is a sectional view taken along the line VIIB-VIIB in FIG. 7A;
FIG. 8A is a plan view of the slider in the second embodiment; FIG. 8B is a sectional view taken along the line VIIIB-VIIIB in FIG. 8A;
FIG. 9A is a plan view showing a state of how the lower case in FIG. 7, the slider in FIG. 8 and the slider spring are assembled and the slider 3 opens a recessed portion 27; FIG. 9B is a plan view showing a state where the recessed portion is closed; FIG. 9C is a sectional view showing the principal portion thereof; and
FIG. 10 is a perspective view schematically showing a conventional tape cassette.

### DESCRIPTION OF THE PREFERRED EMBODIMENTS

First and second embodiments of the present invention will hereinafter be discussed with reference to the accompanying drawings.

### 〈First Embodiment〉

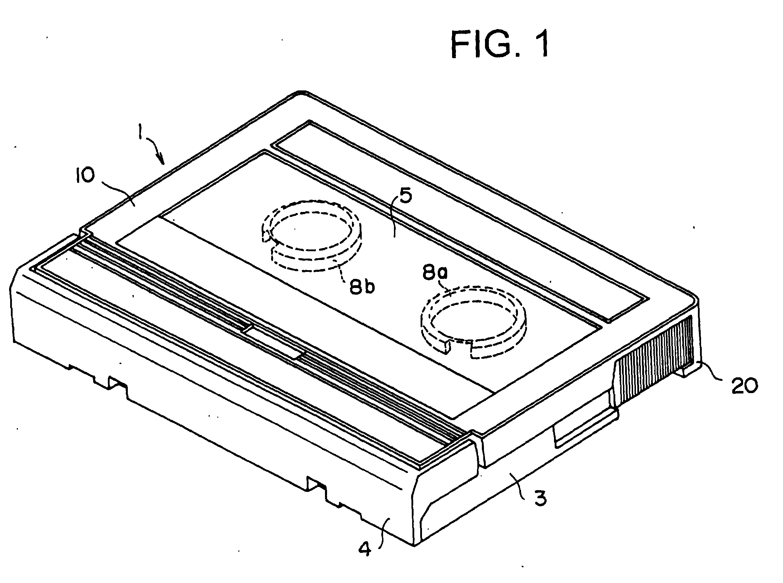

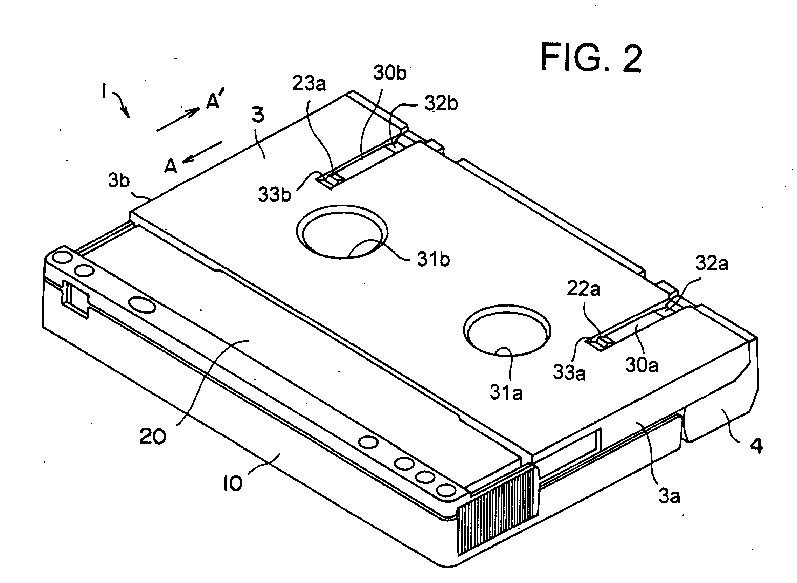

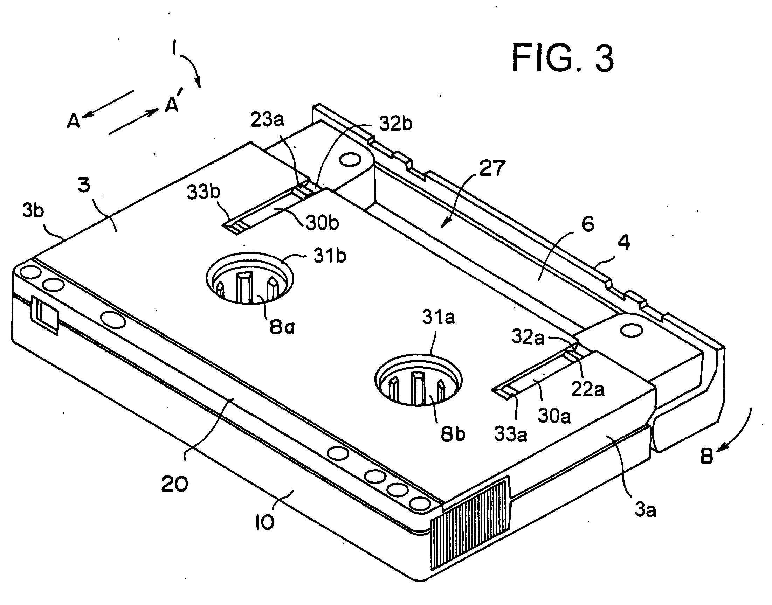

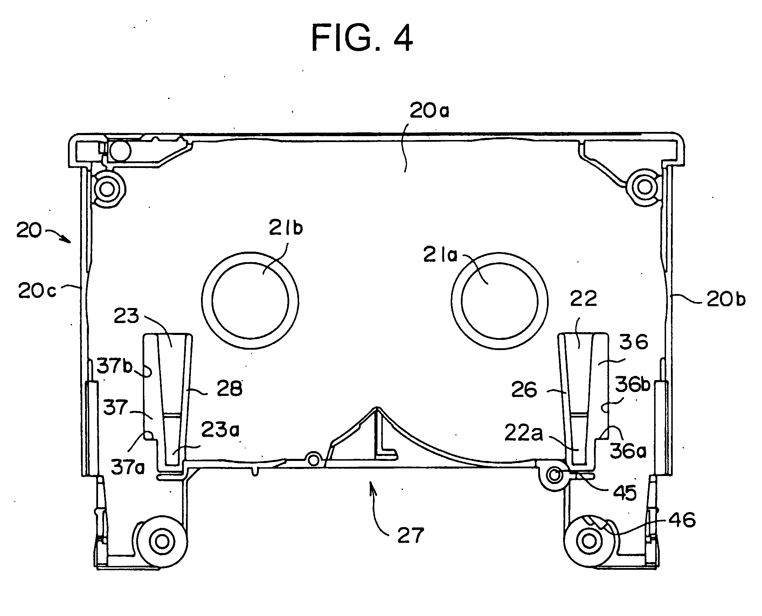

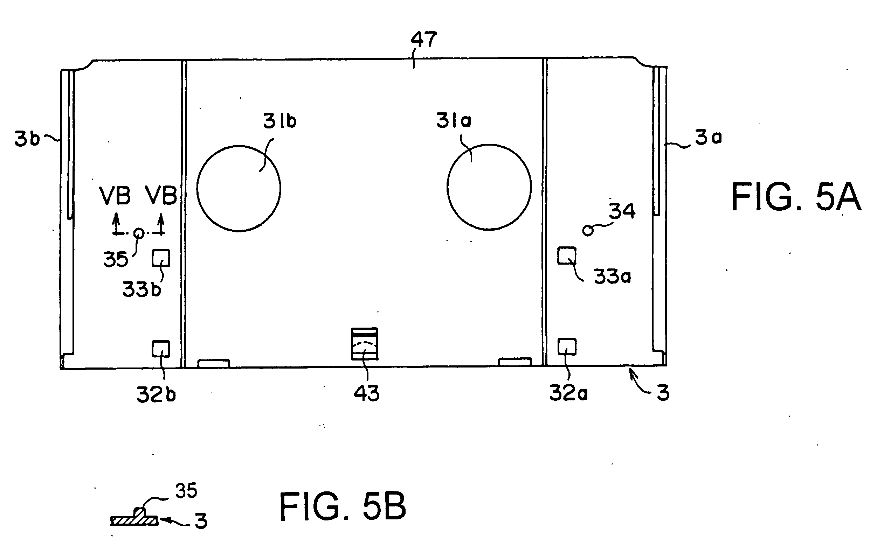

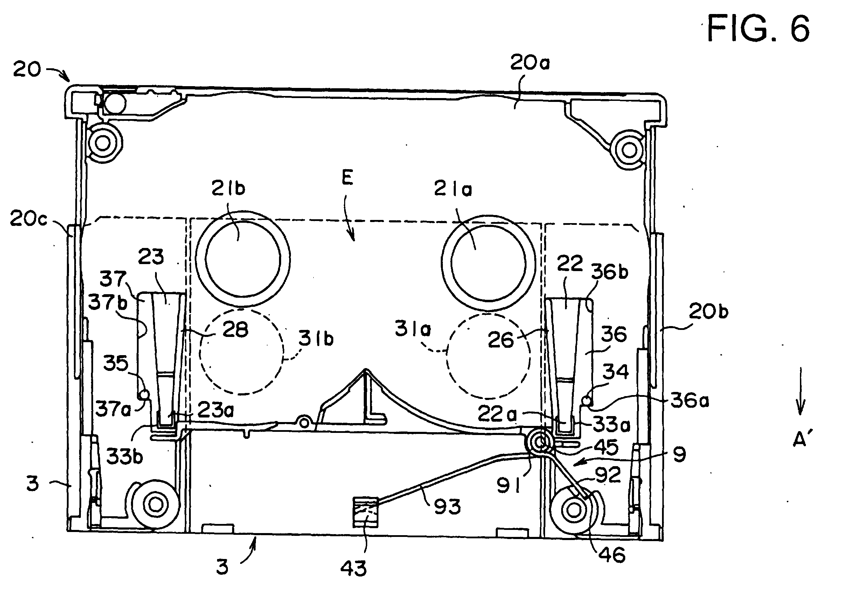

FIG. 1 is a perspective view of a surface side of a tape cassette for a DAT, illustrating a first embodiment of the present invention. FIG. 2 is a perspective view of a rear surface side thereof. FIG. 3 is a perspective view showing how a slider in FIG. 2 opens. FIG. 4 is a plan view showing an inner surface of a lower case. FIG. 5A is a plan view of the slider. FIG. 5B is a sectional view taken along the line VB-VB. FIG. 6 is a plan view showing how the lower case, the slider and a slider spring are assembled.

As shown in FIGS. 1 to 3, a tape cassette 1 includes an upper case 10, a lower case 20, a front cover 4 provided on a front surface side of the upper case 10, a window 5 composed of a light transmitting member formed in a rectangular shape on an upper surface of the upper case 10, and a slider 3 slidably provided on the surface of the lower case 20. Within a body case constructed of the upper case 10 and the lower case 20, there are disposed a pair of hubs 8a, 8b which, with a tape 6 defined as a tape-shaped member wound on peripheries of reels thereof, rotate when in recording/reproducing processes.

As shown in FIGS. 2, 3 and 5A, the slider 3 is constructed such that a principal surface 47 thereof covers the surface of the lower case 20, and side portions 3a, 3b thereof are so attached to the body case as to be slidable in directions A, A' in FIGS. 2 and 3. Further, the principal surface 47 of the slider 3 is formed with two circular openings 31a, 31b, a couple of shallow grooves 30a, 30b disposed right and left and extending in the directions A, A', and engagement holes 32a, 33a, 32b, 33b provided at respective edge portions in the sliding directions A, A' within the grooves 30a, 30b.

An engagement protruded portion 22a of a lock member 22 (FIG. 4) engages with the engagement holes 32a, 33a. Similarly, an engagement protruded portion 23a of a lock member 23 (FIG. 4) engages with the engagement holes 32b, 33b. The lock members 22, 23 are thereby respectively locked. Further, as shown in FIG. 3, a recessed portion 27 for loading the tape 6 by a recording/reproducing apparatus, is formed between the front cover 4 and the slider 3 which slides open in the direction A in FIG. 2.

As illustrated in FIG. 3, when the tape cassette 1 is set in the apparatus, the slider 3 slides in the direction A in FIG. 2, resisting a biasing force, with the result that the recessed portion 27 is exposed in a space defined by the front cover 4. Then, the cassette is constructed so that the slider 3 thus slides in the direction A in FIG. 2 to open the recessed portion 27, whereby the two circular openings 31a, 31b are aligned with two drive shaft insertion holes 21a, 21b formed in the lower case 20, and the hubs 8a, 8b within the body case can be exposed to the outside of the case. Further, when the tape cassette 1 is not used, the slider 3 slides in the direction A' in FIG. 2, and the recessed portion 27 is closed by the slider 3 and the front cover 4 in combination, whereby the tape 6 accommodated in the recessed portion 27 is not exposed to the outside.

As shown in FIG. 4, the lower case 20 has a pair of lock members 22, 23 provided right and left integrally with the lower case 20 and gradually tapered toward the engagement protruded portions 22a, 23a at distal ends thereof from proximal ends thereof, and openings 26, 28 formed in the lower case 20 between the insertion hole 21 and the side wall 20b of the lower case 20 and between the insertion hole 21b and the side wall 20c. The engagement protruded portions 22a, 23a at the distal ends of the lock members 22, 23 respectively engage with the engagement holes 32a, 33a, 32b, 33b of the slider 3, thereby locking the slider 3 in a closing position and an opening position as well.

Further, the lower case 20 includes a hole 36 formed in the side wall 20b in continuation from the opening 26 of the lock member 22, and a hole 37 formed in the side wall 20c in continuation from the opening 28 of the lock member 23. Front side ends of the holes 36, 37 are formed with shoulder-shaped contact portions 36a, 37a. The protruded portions 34, 35 (FIG. 5A) of the slider 3 enter the holes 36, 37 and move together with the slider 3 along side end surfaces 36b, 37b thereof, and the slider 3 contacts upon the contact portions 36a, 37a in a position where the recessed portion is closed. The holes 36, 37 and the contact portions 36a, 37a constitute a body engagement mechanism.

Further, a receptive spindle for receiving a coil member 91 of the slider spring 9 (FIG. 6) serving as a biasing member provided within the case body and an engagement portion 46 for engaging with one leg member 92, are provided on the side of the front surface of an inner surface 20a of the lower case 20. Furthermore, as shown in FIG. 5A, the slider 3 is provided with an engagement portion 43 for engaging with another leg member 93 of the slider spring 9 (FIG. 6). The slider spring 9 (FIG. 6) biases the slider 3 in the direction A' in FIGS. 2 and 3 to close the recessed portion 27.

Moreover, as shown in FIGS. 5A and 5B, the inner surface of the principal surface 47 of the slider 3 is provided with protruded portions 34, 35 serving as slider engagement portions in positions corresponding to the holes 36, 37 in FIG. 4. Heights of the protruded portions are, when the slider 3 is assembled into the lower case 20, set so as not to protrude from the inner surface of the lower case 20. This contrivance is preferable enough to eliminate a possibility where the protruded portions are brought into contact with the tape.

The way of how the lower case 20, the slider 3 and the slider spring 9 are assembled, will be explained referring to FIG. 6. To start with, the slider 3 is assembled into the lower case 20 so as to be inserted in the sliding direction A or A'. Next, as shown in FIG. 6, the coil member 91 of the torsion type slider spring 9 engages with the engagement portion 46 is fitted by insertion t the receptive spindle 45 of the lower case 20, and one leg member 92 thereof engages with one leg member 92. Then, the other leg member 93 engages with the engagement portion 43 of the slider 3.

The slider spring 9 is thus assembled, whereby the slider 3 comes to a state of being biased in the direction A' (in which to close the recessed portion 27 in FIGS. 3 and 4). In this case, as illustrated in FIG. 6, the protruded portions 34, 35 of the slider 3 moves along edge surfaces 36b, 37b within the holes 36, 37, and come to a state of being in close proximity to the contact portions 36a, 37a of the lower case 20. At this time, the lock members 22, 23 of the lower case 20 respectively engage with the engagement holes 33a, 33b of the slider 3, thereby locking the slider 3. Even if the slider 3 locked based on this engagement might be unlocked due to, e.g., an impact, etc. during the assembly, the protruded portions 34, 35 of the slider 3 can immediately contact with the contact portions 36a, 37a of the lower case 20. Therefore, it never happens that the slider 3 disengages from the lower case 20, then protrudes forward (in the direction A' appeared lower in FIG. 6 and comes off the lower case 20.

With the contrivance described above, the slider 3 does not come off the lower case 20 in the sliding direction A' during the assembly with no trouble occurred in the assembly, whereby the assembling characteristic of the tape cassette is enhanced. Further, both of the protruded portions 34, 35 of the slider 3 and the holes 36, 37 of the lower case 20 are easy to mold, and hence there is caused neither an intricacy in terms of a die structure nor a rise in manufacturing costs.

Further, an area E (FIG. 6) at the center of the case body between the centers of the hubs 8a, 8b is easy to become deformed by bending and flexural. As shown in FIG. 6, however, the protruded portions 34, 35 of the slider and the contact portions 36a, 37a of the lower case 20, are disposed closer to the side walls 20b, 20c of the lower case with small flexures than the centers of the circular openings 31a, 31b and of the insertion holes 21a, 21b formed in the positions corresponding to the hubs 8a, 8b, and consequently the engagements between those two members are more ensured, thereby making more certain the effect of preventing the slider 3 from coming off the lower case 20.

The protruded portions 34, 35 and the holes 36, 37 are disposed in the vicinity of the lock members 22, 23 provided right and left, and may also be provided in other areas of the lower case 20. The number of each set of the protruded portions and holes is not limited to 2, however, the plurality of those elements are more effective in preventing the slider from coming off. Further, when the lock members 22, 23 are locked in the positions of closing the recessed portion 27, there may occur the state where the protruded portions 34, 35 contact with the contact portions 36a, 37a.

As shown in FIG. 6, the slider 3 and the slider spring 9 are assembled into the lower case 20, and thereafter the upper case 10 is assembled, thereby completing the tape cassette 1. In the thus constructed tape cassette 1, the engagement protruded portions 22a, 23a of the lock members 22, 23 engage with the engagement holes 33a, 33b of the slider 3 in the position shown in FIG. 2, whereby the slider 3 is locked in the position of closing the recessed portion 27 (FIG. 3). This locked state indicates a state where the tape cassette 1 is unused. Next, when the tape cassette 1 is set in the recording/reproducing apparatus, operation members (unillustrated) coming from the apparatus thrust the engagement protruded portions 22a, 23a of the lock members 22, 23 to unlock the slider 3, with the result that the slide 3 slides in the direction A in FIG. 2. Then, when the slider 3 moves to a position in FIG. 3, the engagement protruded portions 22a, 23a of the lock members 22, 23 engage with the engagement holes 32a, 32b, thereby locking the slider 3 in the position where the recessed portion 27 is opened. As shown in FIG. 3, when the recessed portion 27 opens, the front cover 4 becomes rotatable in a rotating direction B shown in FIG. 3 and rotates to have the tape 6 exposed from the front surface of the tape cassette 1. Further, a drive spindle (not shown) is inserted from the apparatus into the hubs 8a, 8b via the openings 31a, 31b of the slider 3 and the insertion holes 21a, 21b of the lower case 20, and then rotationally driven. With this setting, the recording/reproducing process can be executed.

### 〈Second Embodiment〉

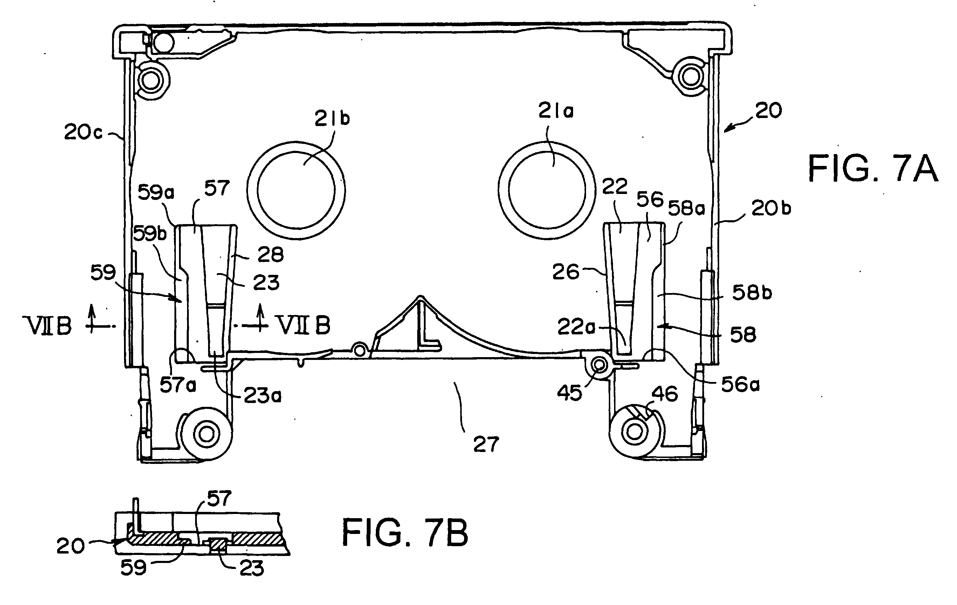

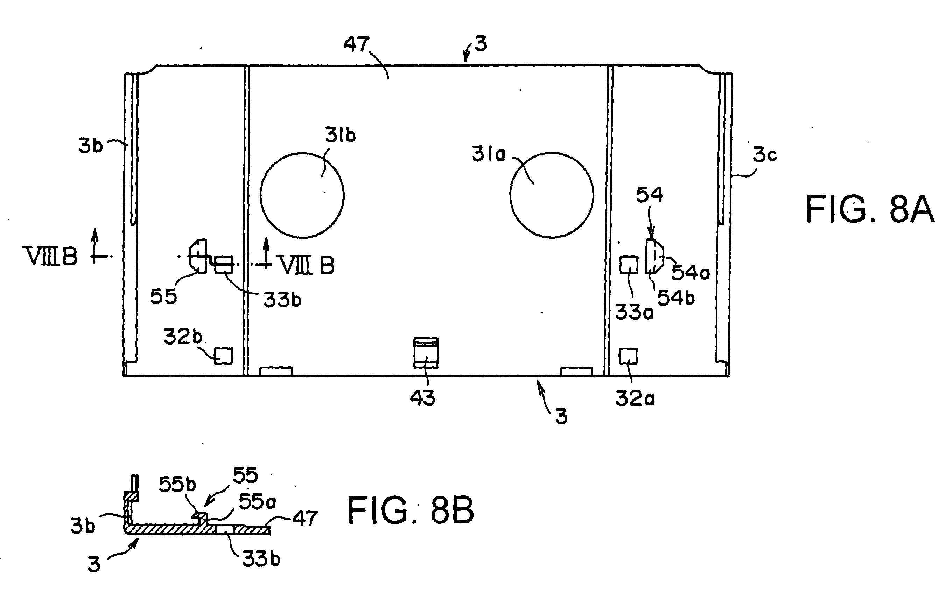

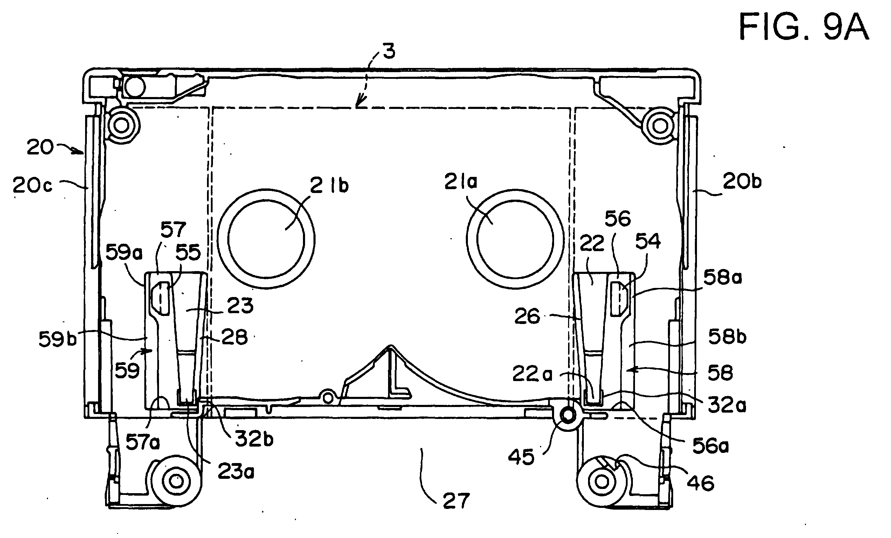

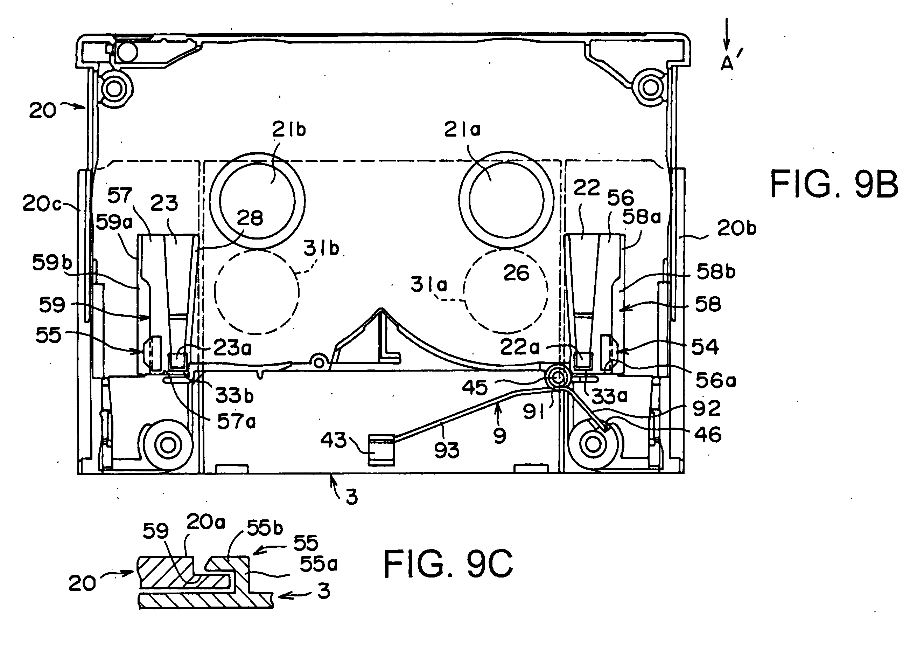

A second embodiment of the present invention has the same construction as the first embodiment, excluding such a contrivance that the slider is prevented from coming off the lower surface of the case body in a vertical direction without deflecting from the sliding direction thereof. Therefore, the same components are marked with the like numerals, of which the repetitive explanations are herein omitted. FIG. 7A is a plan view of the inner surface of the lower case of the cassette tape, showing the second embodiment. FIG. 7B is a sectional view taken along the line VIIB-VIIB. FIG. 8A is a plan view of the slider. FIG. 8B is a sectional view taken along the line VIIIB-VIIIB. FIG. 9A is a plan view showing how the lower case, the slider and the slider spring are assembled as well as showing a state where the slider 3 opens the recessed portion 27. FIG. 9B is a plan view showing a state where the recessed portion 27 is closed. FIG. 9C is a sectional view of a principal portion thereof.

As shown in FIG. 7A, the lower case 20 includes a hole 56 formed on the side of the side wall 20b in continuation from the opening 26 of the lock member 22, and a hole 57 formed on the side of the side wall 20c in continuation from the opening of the lock member 23. As illustrated in FIG. 7B, side surfaces of the holes 56, 57 are formed with stepped portions 58, 59 serving as body engagement portions. The stepped portions 58, 59 are provided with small-width portions 58a, 59a disposed relatively backward with respect to the recessed portion 27, and large-width portions 58b, 59b disposed relatively forward. Contact portions 56a, 57a are provided at side end portions of the holes 56, 57 on the side of the recessed portion 27.

Further, as shown in FIGS. 8A and 8B, an L-shaped protruded portion 55 serving as a slider engagement portion is formed on the principal surface 47 of the slider 3. The protruded portion 55 includes a vertical portion 55a provided erect from the inner surface of the principal surface 47, and a horizontal portion 55b extending from the vertical portion 55a in a horizontal direction to the principal surface 47. The protruded portion 54 has likewise a vertical portion 54a and a horizontal portion 54b. The protruded portions 54, 55 are provided in such positions as to be insertable into the holes 56, 57 of the lower case 20.

As shown in FIG. 9A, in the state where the slider 3 is assembled into the lower case 20 and opens the recessed portion 27, the protruded portions 54, 55 of the slider 3 are positioned within the holes 56, 57 and respectively face to the small-width portions 58a, 59a of the stepped portions 58, 59. With this geometry, the horizontal portions 54b, 55b of the protruded portions are not brought into contact with the stepped portions 58, 59.

Next, as shown in FIG. 9B, when the same slider spring 9 as that in FIG. 6 is assembled in the assembled body shown in FIG. 9A, the slider 3 is biased in the direction A' and thus moves to such a position as to close the recessed portion 27 shown in FIG. 9A. With this movement of the slider 3, the protruded portions 54, 55 move in the direction A' along the stepped portions 58, 59 of the lower case 20 and enter inside the large-width portions 58b, 59b, whereby the lock members 22, 23 engage with the engagement holes 33a, 33b. In this case, as shown in FIG. 9C, the horizontal portion of the protruded portion 55 of the slider 3 gets proximal enough to embrace the stepped portion 59 (the large-width portion 59b). The same state occurs on the side of the protruded portion 54. Accordingly, in the state where the lower case 20, the slider 3 and the slider spring 9 are assembled, even if the slider 3 comes off the lower case 20 in the vertical direction on the plane (in the drawing) and is forced to move, the horizontal portions 54b, 55b immediately contact with the stepped portions 58, 59 at the large-width portions 58a, 59a thereof, and hence the slider never comes off the lower case 20 in the vertical direction on the plane thereof (in a rear-surface direction on the sheet surface in FIG. 9B).

As discussed above, according to the second embodiment, the slider 3 does not come off the lower case 20 in the vertical direction on the plane during the assembly, etc., and hence the assembling characteristic of the tape cassette is enhanced. Further, the protruded portions 54, 55 of the slider 3 are constructed of the vertical portions 54a, 55a and the horizontal portions 54b, 55b, and the holes 58, 59 of the lower case 20 are categorized as openings and therefore easy to mold without the die structure getting complicated, whereby the manufacturing costs do not increase. Note that when the protruded portions 54, 55 enter the large-width portions 58b, 59b, the horizontal portions 54b, 55b may come into contact with the stepped portions 58, 59 in a slidable manner.

Further, a geometry is such that the lock members 22, 23 engage with the engagement holes 33a, 33b, in which positions the respective edge surfaces of the vertical portions 54a, 55a of the protruded portions of the slider 3 become close to (or contact upon) the contact portions 56a, 57a of the holes 56, 57 of the lower case. In this case, the lock members 22, 23 of the lower case 20 lock the slider 3 and, even if the slider locked based on such an engagement might be unlocked due to an impact and so on during, e.g., the assembly, the respective edge surfaces of the vertical portions 54a, 55a of the protruded portions of the slider 3 can immediately contact with the contact portions 56a, 57a, and therefore it never happens that the slider 3 disengages from the lower case 20, the protrudes forward (in the direction A7 downward in the Figure) and comes off the lower case 20. Accordingly, the construction described above prevents the slider 3 from coming off the lower case 20 in the sliding direction A' thereof during the assembly and so forth.

As discussed above, in accordance with the second embodiment, the slider 3 can be prevented from coming off the lower case 20 both in the sliding direction thereof and in the direction vertical to the lower surface of the lower case 20. As obvious from the geometry described above, however, the construction may also such that the slider 3 is prevented from coming off the case 20 only in the direction vertical to the lower surface of the case 20.

Further, as shown in FIG. 9C, the horizontal portions 54b, 55b of the protruded portions 54, 55, when the slider 3 is assembled into the lower case 20, do not protrude from the inner surface 20a of the lower case 20, and consequently there is, as it may be preferable, no possibility in which the protruded portions 54, 55 might come into contact with the tape.

Moreover, the protruded portions 55, 56 and the holes 56, 57 are disposed closer to the sidewalls 20b, 20c of the lower case with small flexures than the centers of the openings 31a, 31b and the insertion holes 21a, 21b formed in the positions corresponding to the hubs 8a, 8b, and consequently the engagements between those two members are more ensured, thereby making more certain the effect of preventing the slider from coming off the case body.

As discussed above, the present invention has been discussed by way of the embodiments but is not limited to those embodiments, and a variety of modifications thereof may be carried out within the scope of the technical concept of the present invention. For instance, the protruded portions of the slider may be provided on the side of the case body, while the holes on the side of the case body may be formed as, e.g., grooves in the slider. Further, the tape cassette is nit confine to those for the DDS and DAT, and may include other categories of tape cassettes if having the slider lock. Moreover, the tape-shaped member may include, as a matter of course, for instance, a cleaning tape other than the recording medium tape.

According to the present invention, the easy-to-mold structure can be attained, and in addition the slider can be surely prevented from coming off the case when assembling the tape cassette.

## Claims

1. A tape cassette comprising:
a case body including an upper case and a lower case;
a pair of hubs provided within said case body and rotating while being wound with a tape-shaped member;
a recessed portion formed on the side of a lower surface of said case body;
a slider so provided in said case body as to be slidable for opening and closing said recessed portion;
a biasing member for biasing said slider in such a direction as to close said recessed portion; and
lock members so provided integrally with said lower case as to lock said slider in respective positions where said recessed portion is closed and opened,
wherein said slider has protruded portions,
said case body has contact portions provided in holes into which said protruded portions are inserted, and
when said slider is in the position of closing the recessed portion, with said protruded portions and said contact portions being in close proximity to each other, said slider thereby stops moving in the direction of closing the said recessed portion.

2. A tape cassette according to claim 1, wherein said protruded portions and said contact portions are disposed closer to side surfaces of said case body than respective centers of said pair of hubs.

3. A tape cassette according to claim 1, wherein said contact portion has a shoulder portion provided on the side surface of said hole, and
said protruded portion can be brought into contact with said shoulder portion.

4. A tape cassette comprising:
a case body including an upper case and a lower case;
a pair of hubs provided within said case body and rotating while being wound with a tape-shaped member;
a recessed portion formed on the side of a lower surface of said case body;
a slider so provided in said case body as to be slidable for opening and closing said recessed portion;
a biasing member for biasing said slider in such a direction as to close said recessed portion; and
lock members so provided integrally with said lower case as to lock said slider in respective positions where said recessed portion is closed and opened,
wherein said case body has a hole,
said slider has a protruded portion including a vertical portion entering said hole and a horizontal portion so provided as to embrace a side surface along said hole, and
with said horizontal portion and the side surface being in close proximity each other, said slider thereby stops moving in a direction vertical to the lower surface of said case body.

5. A tape cassette according to claim 4, wherein the side surface along said hole is formed with a stepped portion contacting with said horizontal portion, and
said horizontal portion, when so positioned as to embrace said stepped portion, does not protrude from an inner surface of said case body.

6. A tape cassette comprising:
a case body including an upper case and a lower case;
a recessed portion formed on the side of a lower surface of said case body;
a slider so provided in said case body as to be slidable for opening and closing said recessed portion;
a biasing member for biasing said slider in such a direction as to close said recessed portion; and
lock members so provided integrally with said lower case as to lock said slider in respective positions where said recessed portion is closed and opened,
wherein said slider includes first and second slider engagement portions,
said case body includes first and second body engagement portions, and
when said slider is in the position where said recessed portion has been closed, with an engagement between said first slider engagement portion and said first body engagement portion, said slider thereby stops moving in the direction of closing said recessed portion, and, with an engagement between said second slider engagement portion and said second body engagement portion, thereby stops moving in a direction vertical to the lower surface of said case body.

7. A tape cassette according to claim 6, wherein said first slider engagement portion includes a protruded portion,
said first body engagement portion includes a contact portion provided at a hole into which said protruded portion is inserted,
said slider, with said protruded portion and said contact portion being in close proximity to each other, thereby stops moving in the direction of closing said recessed portion,
said second body contact portion has a hole,
said second slider contact portion includes a vertical portion entering said hole and a horizontal portion so provided to embrace a side surface along said hole,
said slider, with said horizontal portion and the side surface being in close proximity to each other, thereby stops moving in the direction vertical to the lower surface of said case body,
said first slider engagement portion serves as said second slider engagement portion, and
said first body engagement portion serves as said second body engagement portion.

8. A tape cassette according to claim 6, wherein said first and second slider engagement portions and said first and second body engagement portions are disposed closer to the side surface of said case body than respective centers of said pair of hubs provided within said case body and rotating while being wound with said tape-shaped member.

9. A tape cassette according to claim 1 or 4, wherein said lock member is positioned within an opening formed in said lower case, and
said hole is formed in continuation from said opening.

10. A tape cassette according to claim 1 or 4 or 6, wherein said upper case is assembled after said slider and said biasing member have been assembled.

11. A tape cassette according to claim 1, wherein said tape cassette is used for a DDS (Digital Data Storage) or a DDT (Digital Audio Tape) .
